# FASCICULE DE BREVET EUROPEEN

(11) **EP 2 783 194 B1**
(45) Date de publication et mention de la délivrance du brevet: **02.03.2016**
(21) Numéro de dépôt: 12806532.3
(22) Date de dépôt: 19.11.2012
(51) Int. Cl.: G01M 13/02

(54) **PROCEDE D'ESTIMATION DES JEUX ANGULAIRES DE DENTURES D'UNE BOITE DE VITESSES A DOUBLE EMBRAYAGE**
VERFAHREN ZUR SCHÄTZUNG DES WINKELZAHNRADSPIELS EINES DOPPELKUPPLUNGSGETRIEBES
METHOD FOR ESTIMATING THE ANGULAR TOOTHSET LASH OF A DUAL CLUTCH TRANSMISSION

(30) Priorité: 23.11.2011 FR 1160679
(43) Date de publication de la demande: 01.10.2014
(73) Titulaire: Peugeot Citroën Automobiles SA, 78140 Vélizy Villacoublay (FR)
(72) Inventeur: DESCHAMPS, Alexandre, F-78530 Buc (FR); BALENGHIEN, Olivier, F-93340 Le Raincy (FR)
(74) Mandataire: Rosenberg, Muriel Sylvie
(86) Numéro de dépôt international: PCT/FR2012/052666
(87) Numéro de publication internationale: WO 2013/093264

(56) Documents cités:
- EP-A2- 1 887 244
- US-A1- 2008 215 213

## Description

### DOMAINE TECHNIQUE DE L'INVENTION

L'invention concerne un procédé d'estimation des jeux angulaires de dentures d'une boîte de vitesses à double embrayage. L'invention trouve une application particulièrement avantageuse, mais non exclusive, dans le domaine des boîtes de vitesses de type DCT (« Dual Clutch Transmission » en anglais, pour transmission à double embrayage).

### ETAT DE LA TECHNIQUE

Ces boîtes de vitesses (US 2008215213) comportent de façon connue en soi deux arbres primaires concentriques ou indépendants associés chacun à un embrayage ou tout organe assurant la transmission du couple, ainsi que deux arbres secondaires en relation avec un différentiel de train de roues. Des paires de pignons menant et récepteur, formant les rapports de vitesses, sont installées entre les arbres primaires et les arbres secondaires. Le pignon menant applique le couple de l'arbre primaire au pignon récepteur positionné sur l'arbre secondaire.

Les embrayages permettent au moteur de transmettre un couple aux roues du véhicule à partir de l'instant où les jeux de la boîte de vitesses sont traversés. Les jeux de la boîte de vitesses sont la somme des jeux de dentures entre l'arbre primaire et l'arbre secondaire, des jeux de crabotage et éventuellement des jeux de dentures entre l'arbre secondaire et un différentiel (lors d'un passage avec changement d'arbre secondaire).

Cependant, la transmission réalisée par une boîte de vitesses double embrayage, notamment les boîtes de vitesses de type DCT, est particulièrement sensible aux excitations acycliques des moteurs thermiques, du fait du nombre d'arbres de la boîte de vitesses plus élevé que le nombre d'arbre des boîtes de vitesses classiques simple embrayage. La sensibilité des boîtes de vitesses à double embrayage génère ainsi des bruyances dit de type « grenaille » particulièrement incommodantes pour l'utilisateur.

Afin de limiter ces bruyances, il est connu de contrôler les jeux de dentures de la boîte de vitesses en fin de chaîne de production avec des bancs d'essais spécifiques instrumentés avec des capteurs angulaires permettant d'appliquer un couple en statique au niveau des arbres primaires pour mesurer les jeux angulaires. Cependant, ces bancs d'essais nécessitent un investissement coûteux augmentant le coût et le temps de production de la boîte de vitesses. En effet, les capteurs de position angulaire doivent être très précis afin de mesurer des angles de l'ordre du degré. Les capteurs de position peuvent être remplacés par des accéléromètres aptes à mesurer les vibrations du banc d'essai en fonctionnement. Cependant, les bancs d'essais comportant des accéléromètres, bien qu'efficaces pour repérer des vibrations anormales, ne sont pas forcément adaptés pour détecter un bruit tel que le bruit de type grenaille lié aux jeux angulaires de dentures de la boîte de vitesses.

Le temps de production est lourdement dégradé car il faut installer chaque boîte de vitesses sur le banc d'essai, réaliser le test et ensuite retirer la boîte de vitesses du banc d'essai. De plus, il n'est pas possible d'utiliser un prélèvement statistique des boîtes de vitesses à contrôler en raison d'un risque de dérive de la production.

### OBJET DE L'INVENTION

L'invention a pour but de mesurer facilement les jeux angulaires de dentures des boîtes de vitesses à double embrayage en fin de chaîne de production afin d'éviter les bruyances, notamment de type grenaille. A cet effet, l'invention propose d'estimer les jeux angulaires de dentures du rapport entrant et du rapport sortant lors d'un changement de rapport en fonction d'un angle de jeu estimé de la boîte de vitesses. L'invention propose en outre d'estimer le jeu angulaire de dentures du rapport entrant à l'instant de la traversée du point de léchage et d'estimer le jeu angulaire de dentures du rapport sortant à l'instant du changement de signe du couple transmis.

L'invention concerne donc un procédé d'estimation des jeux angulaires de dentures d'une boîte de vitesses comportant un premier et un deuxième arbre primaire associés chacun à un premier et un deuxième embrayage en relation avec un moteur d'un véhicule, un premier et un deuxième arbre secondaire, et des paires de pignons menant et récepteur formant les rapports de vitesses installées entre les arbres primaires et les arbres secondaires, des manchons de crabotage étant associés aux différents pignons.

Le procédé est caractérisé en ce que, un rapport étant engagé sur chacun des arbres primaires, un embrayage correspondant au rapport sortant étant fermé et l'autre embrayage correspondant au rapport entrant étant ouvert dans un état initial, il comporte les étapes suivantes lors du passage du rapport sortant au rapport entrant, mesurer le régime du premier arbre primaire, mesurer le régime du deuxième arbre primaire, effectuer une intégration de l'écart de régime, à un rapport de démultiplication près, entre les deux arbres primaires pour déterminer l'évolution d'un angle de jeu estimé de la boîte de vitesses en fonction du temps, fermer progressivement l'embrayage initialement ouvert, détecter la traversée du point de léchage de l'embrayage initialement ouvert, estimer le jeu angulaire de dentures du rapport entrant en fonction de l'angle de jeu estimé de la boîte de vitesses à l'instant de la traversée du point de léchage du rapport entrant, et estimer le jeu angulaire de dentures du rapport sortant en fonction de l'angle de jeu estimé de la boîte de vitesses à l'instant du changement de signe d'un couple transmis par l'embrayage sortant.

Cette invention permet de réduire significativement les bruits de mesure sur le signal d'angle estimé grâce à l'intégration de l'écart de régime. Un autre avantage de cette invention est de créer plusieurs indicateurs de suivi de production (jeux angulaires de dentures) élaborés à partir de capteurs déjà existants sur une boîte de vitesses classique à double embrayage. Il n'y a donc pas d'instrumentation coûteuse à ajouter aux bancs d'essai de fin de chaîne de production.

Ces nouveaux indicateurs de suivi de production sont élaborés en temps masqué par rapport aux temps de cycle des bancs d'essai de fin de chaîne de production car les mesures peuvent être effectuées lors des croisements d'embrayages en changements de rapport montants sous couple, avec des temps classiques de 500 ms environ. Le suivi de la production, concernant ces jeux de dentures, peut donc être réalisé en continu sur toutes les boîtes assemblées et non pas de manière statistique, pour pouvoir agir rapidement en amont de la chaîne dès qu'une dérive est détectée. La mise au rebut de certaines pièces hors cotes est donc économisée. Cette invention assure ainsi un meilleur niveau de prestation et de qualité des boîtes de vitesses à double embrayage.

Selon une mise en oeuvre, le procédé comporte l'étape d'estimer les jeux angulaires de dentures entre les arbres secondaires et le différentiel en fonction de l'angle de jeu estimé de la boîte de vitesses lors d'un passage de rapport avec un changement d'arbre secondaire.

Selon une mise en oeuvre, les jeux angulaires de dentures sont estimés en combinaison avec différentes mesures réalisées lors de plusieurs changements de rapport.

Selon une mise en oeuvre, l'intégration de l'écart de régime entre les deux arbres primaires est initialisée avant chaque croisement entre le premier et le deuxième embrayage.

Selon une mise en oeuvre, les chaînes d'acquisition des mesures des régimes des arbres primaires sont identiques.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une représentation schématique d'une boîte de vitesses de type DCT mettant en oeuvre le procédé de l'invention ;
Figure 2 : un schéma fonctionnel du système selon l'invention permettant d'estimer l'angle de déphasage entre l'arbre du rapport entrant et l'arbre du rapport sortant de la boîte de vitesses ;
Figure 3 : des courbes montrant l'évolution en fonction du temps des couples du moteur et des embrayages, des régimes du moteur et des arbres primaires et l'angle de déphasage entre l'arbre du rapport entrant et l'arbre du rapport sortant de la boîte de vitesses lors d'une mise en oeuvre du procédé selon l'invention ; et
Figure 4 : une représentation structurelle de l'angle de déphase entre l'arbre du rapport entrant et l'arbre du rapport sortant lors du passage d'un rapport de vitesses avec un changement d'arbre secondaire selon l'invention.
Les éléments identiques, similaires ou analogues, conservent les mêmes références d'une figure à l'autre.

### DESCRIPTION D'EXEMPLES DE REALISATION DE L'INVENTION

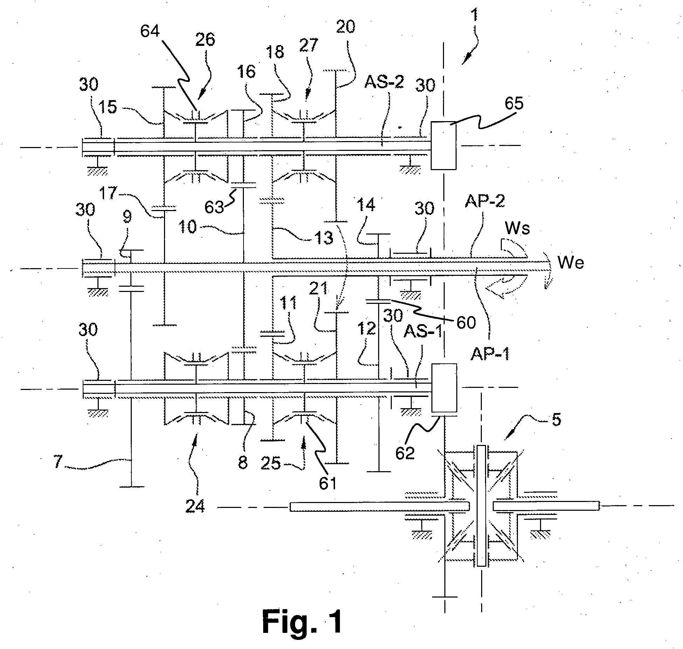

La Figure 1 montre un exemple de boîte de vitesses 1 de type DCT mettant en oeuvre le procédé de l'invention et comportant des premier AP-1 et deuxième AP-2 arbres primaires associés chacun à un embrayage (non représenté) en relation avec un moteur. Les arbres primaires AP-1 et AP-2 sont concentriques. La boîte de vitesses 1 comporte également deux arbres secondaires AS-1, AS-2 connectés à un différentiel 5 lui-même relié aux roues du véhicule (non représentées).

Des paires de pignons, formant les rapports de vitesses, sont installées entre les arbres primaires AP-1, AP-2 et les arbres secondaires AS-1, AS-2. Ces paires de pignons sont formées par un pignon fou monté sur un des arbres secondaires AS-1, AS-2 et un pignon lié en rotation avec un des arbres primaires AP-1, AP-2.

Plus précisément, les pignons 7, 8 montés fous sur l'arbre secondaire AS-1 engrenant respectivement avec les pignons 9 et 10 liés en rotation avec l'arbre primaire AP-1, forment les rapports de première et de septième.

Les pignons 11, 12 montés fous sur l'arbre secondaire AS-1, engrenant respectivement avec les pignons 13 et 14 liés en rotation avec l'arbre primaire AP-2, forment les rapports de sixième et de seconde.

. Les pignons 15, 16 montés fous sur l'arbre secondaire AS-2, engrenant respectivement avec les pignons 17 et 10 liés en rotation avec l'arbre primaire AP-1, forment les rapports de troisième et de cinquième.

Le pignon 18 monté fou sur l'arbre secondaire AS-2 forme, avec le pignon 13 lié en rotation avec l'arbre primaire AP-2, le rapport de quatrième. Le rapport de marche arrière est obtenu par les pignons fous 20 et 21 montés respectivement sur les arbres secondaires AS-2, AS-1. Un rapport de vitesse est formé par un pignon fou installé sur un des arbres primaires AP-1, AP-2 et un pignon lié en rotation avec un des arbres secondaires AS-1, AS-2.

La boîte de vitesses comporte également des manchons de crabotage 24-27 associés chacun à deux rapports de vitesse. Plus précisément, le manchon 24 est installé entre le rapport de première et de septième. Le manchon 25 est installé entre le rapport de seconde et de sixième. Le manchon 26 est installé entre le rapport de troisième et de cinquième. Le manchon 27 est installé entre le rapport de quatrième et la marche arrière.

Les roulements permettant la rotation des arbres primaires AP-1, AP-2, des arbres secondaires AS-1, AS-2 sont référencés 30 sur la Figure 1.

Lors d'un changement de rapport montant, on appelle arbre primaire « sortant », l'arbre primaire AP-1, AP-2 qui est engagé sur le rapport que l'on quitte (rapport sortant N) via le manchon de crabotage 24-27 correspondant. L'embrayage qui lui est associé est dit « embrayage sortant ». Et on appelle arbre primaire « entrant », l'arbre primaire AP-1, AP-2 qui est engagé sur le rapport à engager (le rapport entrant N+1) via le manchon de crabotage 24-27 correspondant. L'embrayage qui lui est associé est dit « embrayage entrant ».

L'embrayage permet au moteur de transmettre un couple aux roues du véhicule à partir de l'instant où les jeux de la boîte de vitesses 1 sont traversés. Les jeux de la boîte de vitesses 1 sont la somme des jeux de dentures entre l'arbre primaire AP-1, AP-2 et l'arbre secondaire AS-1, AS-2, des jeux de crabotage et éventuellement des jeux de dentures entre l'arbre secondaire AS-1, AS-2 et le différentiel 5 (lors d'un passage avec changement d'arbre secondaire). Par exemple, lors d'un passage du deuxième au troisième rapport de vitesse, les jeux de la boîte de vitesses correspondent dans un premier temps à la somme des jeux de dentures 63, des jeux de crabotage 64 et des jeux de dentures 65 avec le différentiel 5, et dans un deuxième temps à la somme des jeux de dentures 60, des jeux de crabotage 61 et des jeux de dentures 62 avec le différentiel 5.

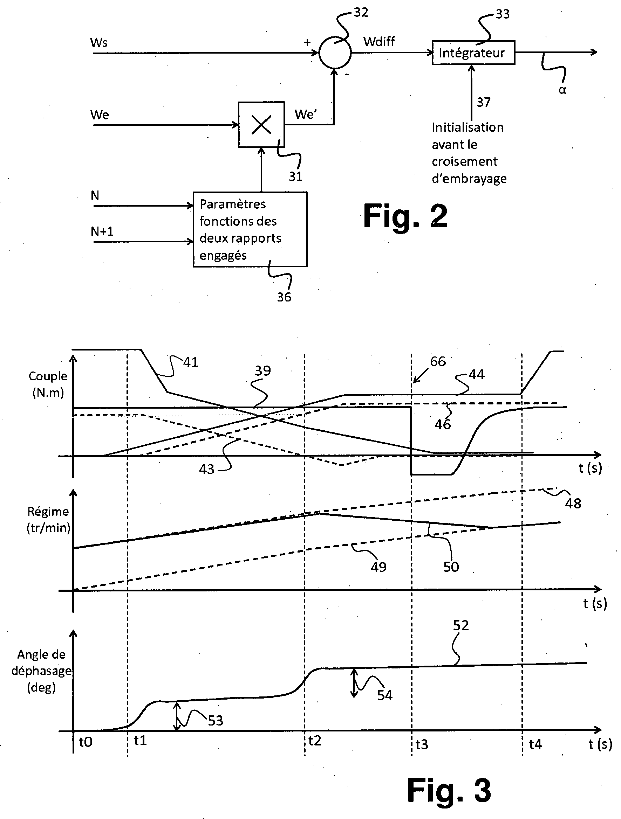

La Figure 2 montre une représentation fonctionnelle du système permettant d'estimer un angle α de déphasage entre l'arbre du rapport entrant et l'arbre du rapport sortant de la boîte de vitesses à double embrayage. Les valeurs d'entrée utilisées sont le régime Ws de l'arbre primaire AP-2 et le régime We de l'arbre primaire AP-1.

Pour mesurer les régimes We et Ws des arbres primaires AP-1, AP-2, un capteur de régime mesure la vitesse des dents d'un pignon menant, d'un pignon récepteur ou encore avec des cibles spécifiques (usinages, pistes magnétiques, ...). Le pignon menant applique le couple de l'arbre primaire AP-1, AP-2 au pignon récepteur disposé sur l'arbre secondaire AS-1, AS-2.

Le régime We d'entrée ayant été préalablement multiplié à l'aide d'un module 31 par le saut de démultiplication entre le rapport entrant N+1 et le rapport sortant N, le soustracteur 32 calcule une valeur de différence Wdiff entre les régimes pour obtenir une valeur We' et Ws.

Le module intégrateur 33 intègre cette valeur de différence Wdiff de manière à obtenir l'angle α de déphasage estimé. De préférence, ce module intégrateur 33 est initialisé au cours du croisement des couples des embrayages entrant et sortant. En particulier, le module intégrateur 33 est initialisé avant de traverser le point de léchage de l'embrayage entrant.

La Figure 3 montre des courbes décrivant l'évolution, en fonction du temps, exprimé en s, des couples du moteur et des embrayages, exprimés en N.m, des régimes du moteur et des arbres primaires, exprimés en tr/min, et l'angle α de déphasage de la boîte de vitesses, exprimé en deg.

Sur le premier graphique, la courbe 41 représente la consigne de couple de l'embrayage sortant et la courbe 43 montre le couple transmis par l'embrayage sortant alors que la courbe 44 représente la consigne de couple de l'embrayage entrant et la courbe 46 montre le couple transmis par l'embrayage entrant. La courbe 39 révèle le couple du moteur.

Sur le deuxième graphique, la courbe 50 montre le régime du moteur alors que les courbes 48 et 49 montrent respectivement les régimes de l'arbre primaire entrant et de l'arbre primaire sortant. Les arbres primaires entrant et sortant pouvant être le premier arbre primaire AP-1 ou le second arbre primaire AP-2 en fonction de la situation de changement de rapport.

Le troisième graphique montre la courbe 52 décrivant la valeur absolue de l'angle α de déphasage estimé en degrés.

A l'instant initial t0, le régime du moteur suit le régime de l'arbre primaire sortant. L'angle α de déphasage entre le rapport entrant et le rapport sortant est nul à l'instant de l'initialisation du changement de rapport. A l'instant t1, la boîte de vitesses entame un changement de rapport, la consigne de couple de l'embrayage entrant ainsi que le couple transmis par l'embrayage entrant traversent le point de léchage et augmentent progressivement jusqu'à l'instant t2. Entre les instant t1 et t2, le couple transmis par l'embrayage sortant décroit de sorte que la somme des couples transmis de l'embrayage sortant et de l'embrayage entrant soit toujours constante et supérieure au couple moteur. Le jeu angulaire de dentures de l'embrayage entrant est estimé en fonction de l'angle 53 observé juste après l'instant t1.

Le point de léchage d'un l'embrayage correspond à la position de l'embrayage où les disques commencent à entrer en frottement l'un avec l'autre, de sorte que le couple transmis par l'embrayage devient supérieur à un seuil de couple faible, par exemple 3N/m. Le point de léchage permet de recaler la fonction de transfert position/couple et ainsi maîtriser le couple transmis par l'embrayage.

A l'instant t2, le couple transmis par l'embrayage sortant change de signe. Après l'instant t2, le jeu angulaire de dentures de l'embrayage sortant est estimé avec l'angle 54 observé.

De manière indicative mais non nécessaire à l'invention, une coupure 66 de l'injection du moteur à l'instant t3 induit une chute du couple du moteur. La courbe 50 du régime du moteur quitte la trajectoire de la courbe 48 du régime de l'arbre primaire sortant pour se rapprocher progressivement de la courbe 49 de l'arbre primaire entrant.

De manière indicative mais non nécessaire à l'invention, à l'instant t4, le régime du moteur correspond au régime de l'arbre primaire entrant et l'embrayage entrant est alors fermé. Le rapport de vitesse est ainsi changé.

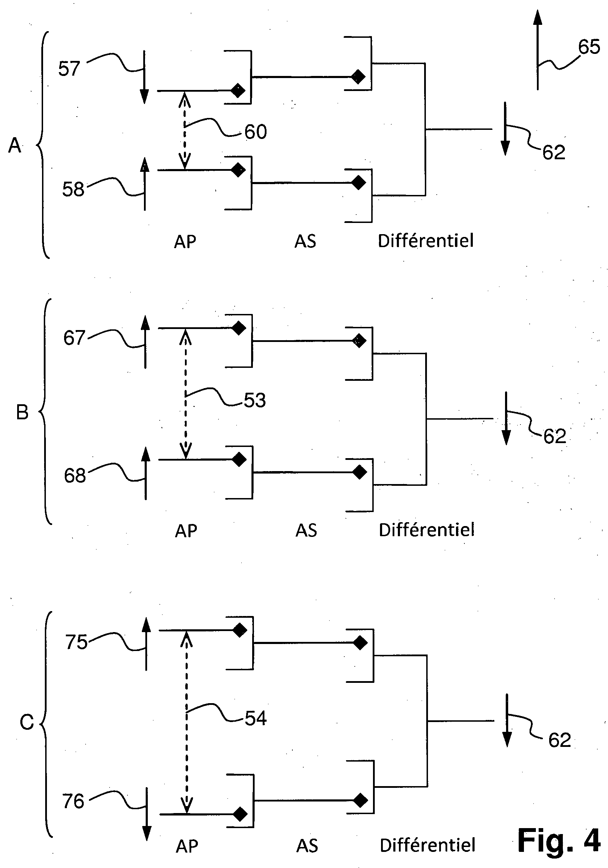

La Figure 4 montre un schéma de passage des jeux avec changement d'arbre secondaire pendant le changement de rapport. Le schéma de passage est composé de trois phases caractéristiques A, B, C représentant la somme des jeux de dentures de l'arbre primaire par rapport à l'arbre secondaire et des jeux de crabotage (à gauche) ainsi que les jeux de dentures de l'arbre secondaire par rapport au différentiel 5 (à droite) pour le rapport entrant (en haut) et le rapport sortant (en bas). Une flèche montre la convention du sens de tirage 65 pour les trois phases caractéristiques de la Figure 4.

La première phase A montre l'instant d'initialisation du changement de rapport avec changement d'arbre secondaire. Le couple de traînée 57 de la boîte de vitesses sur le rapport entrant étant opposé au couple du moteur 58 sur le rapport sortant, l'angle 60 de déphasage estimé entre le rapport entrant et le rapport sortant est nul.

La deuxième phase B montre le résultat de la traversée du point de léchage de l'embrayage entrant. Les jeux de dentures du rapport entrant sont décalés par rapport à leurs positions dans la phase A. A cet instant du passage de rapport, le couple de léchage 67 du rapport entrant et le couple transmis 68 du rapport sortant suivant le sens de tirage 65, l'angle 53 de déphasage estimé permet d'obtenir les jeux de dentures du rapport entrant.

La troisième phase C montre le résultat de l'inversion du couple transmis par l'embrayage sortant. Les jeux de dentures du rapport sortant sont décalés par rapport à leurs positions à la phase B. A cet instant du passage de rapport, le couple transmis 75 du rapport entrant étant opposé au couple transmis inversé 76 du rapport sortant, l'angle 54 de déphasage estimé permet d'obtenir les jeux de dentures du rapport sortant. Pour les trois phases A, B, C, le couple résistant de sortie 62 est opposé au sens de tirage 65.

De même, on peut tracer un schéma du même type que la Figure 4 pour un passage de rapport sans changement d'arbre secondaire. Dans ce cas, les jeux de dentures entre l'arbre secondaire AS-1, AS-2 et le différentiel 5 ne sont pas traversés.

La déduction des jeux angulaires de dentures de la boîte de vitesses dépend de la structure de la boîte de vitesses. Si l'on considère la boîte de vitesses 1 de la Figure 1, chaque changement de rapport permet d'estimer des jeux différents.

Pour le passage du premier au second rapport de vitesse, l'angle 53 mesuré correspond à la somme des jeux de dentures entre l'arbre primaire AP-1 et l'arbre secondaire AS-1 et des jeux du crabot, pour le premier rapport. L'angle 54 mesuré correspond à la somme des jeux de dentures entre l'arbre primaire AP-2 et l'arbre secondaire AS-1 et des jeux du crabot, pour le deuxième rapport.

Pour le passage du deuxième au troisième rapport de vitesse, l'angle 53 mesuré correspond à la somme des jeux de dentures entre l'arbre primaire AP-2 et l'arbre secondaire AS-1 et des jeux du crabot pour le deuxième rapport, et des jeux de dentures entre l'arbre secondaire AS-1 et le différentiel 5. L'angle 54 mesuré correspond à la somme des jeux de dentures entre l'arbre primaire AP-1 et l'arbre secondaire AS-2, des jeux du crabot pour le troisième rapport, et des jeux de dentures entre l'arbre secondaire AS-2 et le différentiel 5.

Pour le passage du troisième au quatrième rapport de vitesse, l'angle 53 mesuré correspond à la somme des jeux de dentures entre l'arbre primaire AP-1 et l'arbre secondaire AS-2 et des jeux du crabot pour le troisième rapport. L'angle 54 mesuré correspond à la somme des jeux de dentures entre l'arbre primaire AP-2 et l'arbre secondaire AS-2 et des jeux du crabot pour le quatrième rapport.

Pour le passage du quatrième au cinquième rapport de vitesse, l'angle 53 mesuré correspond à la somme des jeux de dentures entre l'arbre primaire AP-2 et l'arbre secondaire AS-2 et des jeux du crabot pour le quatrième rapport. L'angle 54 mesuré correspond à la somme des jeux de dentures entre l'arbre primaire AP-1 et l'arbre secondaire AS-2 et des jeux du crabot pour le cinquième rapport.

Pour le passage du cinquième au sixième rapport de vitesse, l'angle 53 mesuré correspond à la somme des jeux de dentures entre l'arbre primaire AP-1 et l'arbre secondaire AS-2, des jeux du crabot pour le cinquième rapport, et des jeux de dentures entre l'arbre secondaire AS-2 et le différentiel 5. L'angle 54 mesuré correspond à la somme des jeux de dentures entre l'arbre primaire AP-2 et l'arbre secondaire AS-1 des jeux du crabot pour le sixième rapport, et des jeux de dentures entre l'arbre secondaire AS-1 et le différentiel 5.

Pour le passage du sixième au septième rapport de vitesse, l'angle 53 mesuré correspond à la somme des jeux de dentures entre l'arbre primaire AP-2 et l'arbre secondaire AS-1 et des jeux du crabot du sixième rapport. L'angle 54 mesuré correspond à la somme des jeux de dentures entre l'arbre primaire AP-1 et l'arbre secondaire AS-1 et des jeux du crabot pour le septième rapport.

Il est donc possible d'estimer les jeux de dentures et de crabot entre les arbres primaires AP-1, AP-2 et les arbres secondaires AS-1, AS-2 ainsi que les jeux de dentures entre les arbres secondaires AS-1, AS-2 et le différentiel 5. Les jeux de dentures entre les arbres secondaires AS-1, AS-2 et le différentiel 5 sont les jeux de dentures les plus impactants concernant les problèmes de bruyance des boîtes de vitesses à double embrayage.

## Revendications

1. Procédé d'estimation des jeux angulaires de dentures d'une boîte de vitesses (1) comportant :
- un premier et un deuxième arbre primaire (AP-1, AP-2) associés chacun à un premier et un deuxième embrayage en relation avec un moteur d'un véhicule,
- un premier et un deuxième arbre secondaire (AS-1, AS-2), et
- des paires de pignons (7-18) menant et récepteur formant les rapports de vitesses installées entre les arbres primaires (AP-1, AP-2) et les arbres secondaires (AS-1, AS-2), des manchons de crabotage étant associés aux différents pignons,
**caractérisé en ce que**, un rapport étant engagé sur chacun des arbres primaires, un embrayage correspondant au rapport sortant étant fermé et l'autre embrayage correspondant au rapport entrant étant ouvert dans un état initial, le procédé comporte les étapes suivantes lors du passage du rapport sortant au rapport entrant :
- mesurer le régime (We) du premier arbre primaire (AP-1),
- mesurer le régime (Ws) du deuxième arbre primaire (AP-2),
- effectuer une intégration de l'écart de régime (Wdiff), à un rapport de démultiplication près, entre les deux arbres primaires (AP-1, AP-2) pour déterminer l'évolution d'un angle (*α*) de jeu estimé de la boîte de vitesses (1) en fonction du temps,
- fermer progressivement l'embrayage initialement ouvert,
- détecter la traversée du point de léchage de l'embrayage initialement ouvert,
- estimer le jeu angulaire de dentures du rapport entrant en fonction de l'angle (*α*) de jeu estimé de la boîte de vitesses (1) à l'instant de la traversée du point de léchage du rapport entrant, et
- estimer le jeu angulaire de dentures du rapport sortant en fonction de l'angle (*α*) de jeu estimé de la boîte de vitesses (1) à l'instant du changement de signe d'un couple transmis par l'embrayage sortant.

2. Procédé selon la revendication 1, **caractérisé en ce que** le procédé comporte l'étape d'estimer les jeux angulaires de dentures entre les arbres secondaires (AS-1, AS-2) et le différentiel (5) en fonction de l'angle (α) de jeu estimé de la boîte de vitesses (1) lors d'un passage de rapport avec un changement d'arbre secondaire (AS-1, AS-2).

3. Procédé selon la revendication 1 ou 2, **caractérisé en ce que** les jeux angulaires de dentures sont estimés en combinaison avec différentes mesures réalisées lors de plusieurs changements de rapport.

4. Procédé selon l'une des revendications 1 à 3, **caractérisé en ce que** l'intégration de l'écart de régime (Wdiff) entre les deux arbres primaires (AP-1, AP-2) est initialisée avant chaque croisement entre le premier et le deuxième embrayage.

5. Procédé selon l'une des revendications 1 à 4, **caractérisé en ce que**, les chaînes d'acquisition des mesures des régimes (We, Ws) des arbres primaires (AP, AP-2) sont identiques.

## Patentansprüche

1. Verfahren zur Schätzung der Winkelzahnradspiele von Verzahnungen eines Schaltgetriebes (1), das Folgendes umfasst:
- eine erste und eine zweite Primärwelle (AP-1, AP-2), die jeweils mit einer ersten und einer zweiten Kupplung in Verbindung mit einem Motor eines Fahrzeugs assoziiert sind,
- eine erste und eine zweite Sekundärwelle (AS-1, AS-2), und,
- Antriebs- und Empfangsritzelpaare (7-18), die Schaltgänge bilden, die zwischen den Primärwellen (AP-1, AP-2) und den Sekundärwellen (AS-1, AS-2) installiert sind, wobei mit den verschiedenen Ritzeln Klauenkupplungshülsen assoziiert sind,
**dadurch gekennzeichnet, dass**, wenn ein Gang auf jeder der Primärwellen eingerückt ist, eine dem ausgehenden Gang entsprechende Kupplung geschlossen ist und die andere Kupplung, die dem eingehenden Gang entspricht, in einem Anfangszustand geöffnet ist, wobei das Verfahren die folgenden Schritte beim Wechseln vom ausgehenden Gang zum eingehenden Gang umfasst:
- Messen der Drehzahl (We) der ersten Primärwelle (AP-1),
- Messen der Drehzahl (Ws) der zweiten Primärwelle (AP-2),
- Ausführen einer Integration des Drehzahlunterschieds (Wdiff) bis auf ein Untersetzungsverhältnis zwischen den zwei Primärwellen (AP-1, AP-2), um die Entwicklung eines geschätzten Winkelspiels (α) des Schaltgetriebes (1) in Abhängigkeit von der Zeit zu bestimmen,
- allmähliches Schließen der anfänglich offenen Kupplung,
- Erfassen des Durchquerens des Leckpunkts der anfänglich offenen Kupplung,
- Schätzen des Winkelzahnradspiels des eingehenden Gangs in Abhängigkeit von dem geschätzten Winkelspiel (α) des Schaltgetriebes (1) im Augenblick des Durchquerens des Leckpunkts des eingehenden Gangs, und
- Schätzen des Winkelzahnradspiels des ausgehenden Gangs in Abhängigkeit von dem geschätzten Winkelspiel (α) des Schaltgetriebes (1) im Augenblick des Vorzeichenwechsels eines Drehmoments, das von der ausgehenden Kupplung übertragen wird.

2. Verfahren nach Anspruch 1, **dadurch gekennzeichnet, dass** das Verfahren den Schritt des Schätzens der Winkelzahnradspiele zwischen den Sekundärwellen (AS-1, AS-2) und dem Differenzial (5) in Abhängigkeit von dem geschätzten Winkelspiel (α) des Schaltgetriebes (1) bei einem Gangwechsel mit einem Wechsel der Sekundärwelle (AS-1, AS-2) umfasst.

3. Verfahren nach Anspruch 1 oder 2, **dadurch gekennzeichnet, dass** die Winkelzahnradspiele kombiniert mit unterschiedlichen Messungen geschätzt werden, die bei mehreren Gangwechseln ausgeführt werden.

4. Verfahren nach einem der Ansprüche 1 bis 3, **dadurch gekennzeichnet, dass** die Integration des Drehzahlunterschieds (Wdiff) zwischen den zwei Primärwellen (AP-1, AP-2) vor jedem Kreuzen zwischen der ersten und der zweiten Kupplung initialisiert wird.

5. Verfahren nach einem der Ansprüche 1 bis 4, **dadurch gekennzeichnet, dass** die Erfassungsketten der Drehzahlmessungen (We, Ws) der Primärwellen (AP-1, AP-2) identisch sind.

## Claims

1. A method for estimating the angular toothset lash of a transmission (1), comprising:
- a first and a second primary shaft (AP-1, AP-2) each associated with a first and a second clutch in relation with an engine of a vehicle,
- a first and a second secondary shaft (AS-1, AS-2), and
- pairs of drive and counter drive gears (7-18) forming the gear ratios installed between the primary shafts (AP-1, AP-2) and the secondary shafts (AS-1, AS-2), clutch sleeves being associated with the different drive gears,
**characterized in that**, a ratio being engaged on each of the primary shafts, a clutch corresponding to the outgoing ratio being closed and the other clutch corresponding to the incoming ratio being open in an initial state, the method comprises the following steps when shifting from the outgoing ratio to the incoming ratio:
- measuring the speed (We) of the first primary shaft (AP-1),
- measuring the speed (Ws) of the second primary shaft (AP-2),
- integrating the difference in speed (Wdiff), to within one step down ratio, between the two primary shafts (AP-1, AP-2) in order to determine the change in an estimated angle (α) of lash of the transmission (1) as a function of time,
- progressively closing the initially open clutch,
- detecting the crossing of the shift point of the initially open clutch,
- estimating the angular lash of the toothsets of the incoming ratio as a function of the estimated lash angle (α) of the transmission (1) at the moment of crossing the incoming ratio shift point, and
- estimating the angular lash of the toothset of the outgoing ratio as a function of the estimated lash angle (α) of the transmission (1) at the moment at which the torque transmitted by the outgoing clutch changes sign.

2. The method according to Claim 1, **characterized in that** the method comprises the step of estimating the angular toothset lash between the secondary shafts (AS-1, AS-2) and the differential (5) as a function of the estimated lash angle (α) of the transmission (1) on a gear ratio shift with a change of secondary shaft (AS-1, AS-2).

3. The method according to Claim 1 or 2, **characterized in that** the angular toothset lash is estimated in combination with different measurements carried out during several gear changes.

4. The method according to one of Claims 1 to 3, **characterized in that** the integration of the difference in speed (Wdiff) between the two primary shafts (AP-1, AP-2) is initiated before each crossing between the first and the second clutch.

5. The method according to one of Claims 1 to 4, **characterized in that** the acquisition chains of the measurements of the speeds (We, Ws) of the primary shafts (AP, AP-2) are identical.
